# EUROPEAN PATENT APPLICATION

(11) **EP 4 678 265 A1**
(43) Date of publication of application: **14.01.2026**
(21) Application number: 24187264.7
(22) Date of filing: 09.07.2024
(51) Int. Cl.: B01D 45/02, B01D 45/16

(54) **TWO-STAGE WATER SEPARATOR SYSTEM**

(71) Applicant: MANN+HUMMEL GmbH, 71636 Ludwigsburg (DE)
(72) Inventor: WEBER, Andreas, 71636 Ludwigsburg (DE); NOCERA, Ettore, 71636 Ludwigsburg (DE)
(74) Representative: Mann + Hummel Intellectual Property

(57) **Abstract**

A two-stage water separator device (1; 1') includes a water separator housing (2) including a first-stage water separation chamber (3) and a second-stage water separation chamber (4). The first-stage water separation chamber (3) includes a water-laden volume flow inlet port (8) defining a water-laden volume flow inlet channel (15) for channeling a water-laden volume flow into the first-stage water separation chamber (3), and the second-stage water separation chamber (4) includes a water-unladen volume flow outlet port (9) defining a water-unladen volume flow outlet channel (19) for channeling a water-unladen volume flow out of the second-stage water separation chamber (4), a reversal of flow direction from horizontal to vertical occurring between the water-laden volume flow and the water-unladen volume flow.

## Description

### Technical Field

Embodiments relate to two-stage water separator device including a water separator housing including a first-stage water separation chamber and a second-stage water separation chamber, wherein the first-stage water separation chamber includes a water-laden volume flow inlet port defining a water-laden volume flow inlet channel for channeling a water-laden volume flow into the first-stage water separation chamber, wherein the second-stage water separation chamber includes a water-unladen volume flow outlet port defining a water-unladen volume flow outlet channel for channeling a water-unladen volume flow out of the second-stage water separation chamber, an immersion tube including an immersion tube portion immersed in the second-stage water separation chamber for fluidically connecting the water-unladen volume flow outlet port with the second-stage water separation chamber, a swirl generator assembly including a swirl generator arranged inside a swirl generator housing to apply a rotational movement to the water-laden volume flow fluidically between the first-stage water separation chamber and the second-stage water separation chamber, a water volume flow outlet port defining a water volume flow outlet channel for discharging of separated water out of the water separator housing.

### Background Art

Such two-stage water separator devices are per se known in the art. They are, e.g., typically installed in fuel cell vehicles at defined positions in their anode path and cathode path. In the anode path, the exhaust gas side is typically considered.

Said exhaust gas side provides the water-laden volume flow. The water-laden volume flow typically includes an air volume flow which is laden with water in the form of water droplets. Said water-laden volume flow enters the two-stage water separator device via the water-laden volume flow inlet port. The water-laden volume flow then flows through the water-laden volume flow inlet channel. It enters into the first-stage water separation chamber.

After tangential inflow into the first-stage water separation chamber the water droplets in the water-laden volume flow adhere to the inner wall of the first-stage water separation chamber. During this adhesion process water droplets of different sizes merge with each other. The so-formed larger water droplets are heavier and thus subjected to larger gravitational pull. Said gravitational pull acts in a gravitationally downward direction. Over time the water content in the water-laden volume flow is reduced within the first-stage water separation chamber.

However, using water separation of the first-stage water separation chamber might not be sufficient in certain applications. In order to further increase the water separation efficiency, the second-stage water separation chamber is provided. It is fluidically connected to the first-stage water separation chamber by means of the swirl generator assembly.

The water-laden volume flow flows from the first-stage water separation chamber after a flow diversion from horizontal to vertical into the swirl generator assembly. The swirl generator is arranged inside the swirl generator housing. The swirl generator causes centrifugal forces to act on the water-laden volume flow. The water droplets contained in the water-laden volume flow are hence forced against the inner walls of the swirl generator housing. There the water droplets adhere and are forced radially outwards into the second-stage water separation chamber.

As a result, the water-laden volume flow separates into the water volume flow and the water-unladen volume flow. On the one hand, the water volume flow consists of the water droplets separated from the water-laden volume flow. It flows inside the water volume flow outlet channel. The water volume flow outlet channel guides the water volume flow through the water volume flow outlet port outside of the two-stage water separator device. The separated water is partly released into the environment of the fuel cell vehicle and partly reused in its fuel cell system. Reusing the separated water can include usage in a cooling system, a compressor or a humidifier. On the other hand, the water-unladen volume flow consists of the remaining volume flow without the water droplets previously present in the water-laden volume flow, i.e., typically of an air volume flow. It flows from the second-stage water separation chamber to the water-unladen volume flow outlet channel. The water-unladen volume flow outlet channel guides the water-unladen volume flow through the immersion tube portion to the water-unladen volume flow outlet port outside of the two-stage water separator device. The water-unladen volume flow is communicated further to different components of the fuel cell vehicle.

Different fuel cell vehicles may, however, include differently sized fuel cell systems. As such, the two-stage water separator device must be adapted to the required size and volume flow of the different fuel cell systems. As a result, the two-stage water separator device must be adapted to different installation spaces in different applications while its water separation performance should remain as consistent as possible at the same time.

### Summary

It is therefore an objective of the embodiments to provide a two-stage water separator device which is adapted to a special installation space in a fuel cell system, whereby the water collection area should be located below the lowest point of the overall system. At the same time it can provide high separation performance due to defined flow diversions.

This objective is achieved in that the two-stage water separator device includes a water separator housing including a first-stage water separation chamber and a second-stage water separation chamber. The first-stage water separation chamber includes a water-laden volume flow inlet port defining a water-laden volume flow inlet channel for channeling a water-laden volume flow into the first-stage water separation chamber. The second-stage water separation chamber includes a water-unladen volume flow outlet port defining a water-unladen volume flow outlet channel for channeling a water-unladen volume flow out of the second-stage water separation chamber, a reversal of flow direction from horizontal to vertical occurring between the water-laden volume flow and the water-unladen volume flow. The two-stage water separator device further includes an immersion tube including an immersion tube portion immersed in the second-stage water separation chamber and for fluidically connecting the water-unladen volume flow outlet port with the second-stage water separation chamber, a swirl generator assembly including a swirl generator housing and a swirl generator arranged inside the swirl generator housing, the swirl generator being for generating a swirl in the water-laden volume flow fluidically between the first-stage water separation chamber and the second-stage water separation chamber, and a water volume flow outlet port defining a water volume flow outlet channel for channeling a water volume flow out of the water separator housing. The swirl generator housing includes a second-stage deflector portion that is conically flared and in axial alignment with and facing the immersion tube portion, the second-stage deflector portion being for deflecting the water-laden volume flow.

The second-stage deflector portion may be arranged at an axial end portion of the swirl generator housing. The second-stage deflector portion may extend in a circumferential direction of the swirl generator housing. It may extend around the entire circumference of the swirl generator housing. The axial extension of the second-stage deflector portion may correspond to a vertical direction with respect to the installation orientation of the two-stage water separator device. The axial extension of the immersion tube portion runs in axial alignment with the axial extension of the second-stage deflector portion. During operation of the swirl generator the water droplets contained in the water-laden volume flow are forced against the inner walls of the swirl generator housing. They are accelerated in a direction towards the second-stage deflector portion. As a result, the water droplets contained in the water-laden volume flow are deflected radially outwards by means of the conically flared second-stage deflector portion due to their inertia. At the same time the remaining water-unladen volume flow continues to flow radially inwards. The radial direction of the second-stage water deflector portion may correspond to a horizontal direction with respect to the installation orientation of the two-stage water separator device. The radial extension of the immersion tube portion may run essentially parallel to the radial extension of the second-stage deflector portion. Consequently, the water droplets still have a very high acceleration at the edge of the second-stage deflector portion on the inner walls of the swirl generator housing. They hence detach from the edge of the second-stage deflector portion and continue to flow inside the second-stage water separation chamber until they collide with the inner walls of the latter.

Further advantageous embodiments are provided in the dependent claims.

In an embodiment, a radial extension of the second-stage deflector portion exceeds a radial extension of the immersion tube portion.

As the immersion tube portion is in axial alignment with the second-stage deflector portion the water droplets detached therefrom are deflected radially away from the immersion tube portion. The detached water droplets do not enter the immersion tube portion. They flow radially past the immersion tube portion. The water droplets can adhere to the inner walls of the second-stage water separation chamber and are collected in the latter. In general the pressure conditions inside the second-stage water separation chamber can thus be optimized, i.e., minimized, and the overall water separation performance is increased.

In an embodiment, the swirl generator housing further includes a first-stage deflector portion that is conically flared and arranged in the first-stage water separation chamber, the first-stage deflector portion being for deflecting the water-laden volume flow.

The first-stage deflector portion may be arranged at an axial end portion of the swirl generator housing opposite the second-stage deflector portion. The first-stage deflector portion may extend in a circumferential direction of the swirl generator housing. It may extend around the entire circumference of the swirl generator housing. The first-stage deflector portion serves a dual purpose. On the one hand, it deflects the water-laden volume flow inside the first-stage water separation chamber to the inner walls of the latter. A water volume flow barrier between the first-stage water separation chamber and the inside of the swirl generator housing is thus provided. Water droplets whirled up inside the first-stage water separation chamber hit the first-stage deflector portion and are deflected back into the first-stage water separation chamber. They are thereby prevented from entering the inner space of the first-stage water separation chamber. They may then adhere to the inner walls of the first-stage water separation chamber. There they may combine with other water droplets to form larger water droplets which then remain separated from the water-laden volume flow. Hence, the water separation performance is improved. On the other hand, the first-stage deflector portion also provides a smooth contour as it is conically flared. The first-stage deflector portion is conically flared in a direction away from the second-stage deflector portion. The smooth contour of the conically flared first-stage deflector portion. creates an optimization of the flow conditions at the inlet opening. The still remaining water droplets are hence sucked into the swirl generator assembly and are routed to the second stage together with the water-laden volume flow downstream. The water separation performance is improved.

In an embodiment, an axial extension of the swirl generator corresponds to at most one half of an axial extension of the swirl generator housing.

The swirl generator is thus comparatively small compared to the swirl generator housing. This reduces the overall package size of the two-stage water separator device. Installation in small installation spaces becomes possible. Moreover, a comparatively small swirl generator may also contribute to reduce the pressure loss of the volume flow within the two-stage water separator device. As the distance between the swirl generator and the second-stage deflector portion is comparatively large in this embodiment, more time is provided to the water droplets to come into contact with the inner walls of the swirl generator housing.

In an embodiment, the water volume flow outlet channel includes a first-stage water volume flow outlet channel fluidically and/or spatially separated from a second-stage water volume flow outlet channel.

The provision of a first-stage water volume flow outlet channel and a separate second-stage water volume flow outlet channel is advantageous with respect to the pressure regime inside the two-stage water separator device. In general, the first-stage water separation chamber and the second-stage water separation chamber have different pressure levels. The pressure level in the first-stage water separation chamber is typically higher than the pressure level in the second-stage water separation chamber. Hence, there is a risk of a parasite volume flow forming between the first-stage water separation chamber and the second-stage water separation chamber. Said parasite volume flow may whirl up and drag along water droplets. The overall water separation performance is reduced. In order to avoid such a parasite volume flow the first-stage water volume flow outlet channel and the second-stage water volume flow outlet channel are fluidically and/or spatially separated.

In an embodiment, the water separator housing further includes a throttle element fluidically separating the first-stage water separation chamber from the second-stage water separation chamber by fluidically connecting the lowest point of the first-stage water separation chamber and the second-stage water volume flow outlet channel.

In this way the first-stage water volume flow outlet channel is fluidically closed off from the second-stage water volume flow outlet channel. A parasite volume flow between the first-stage water volume flow outlet channel and the second-stage water volume flow outlet channel is avoided. However, in order to be able to sufficiently drain the first-stage water separation chamber and the second-stage water separation chamber a throttle element is provided. The throttle element may consist of a defined throttle bore connecting the first-stage water collection area and the second-stage water volume flow outlet channel.

In an embodiment, the water volume flow outlet port is arranged as a common water volume flow outlet port for the first-stage water separation chamber and the second-stage water separation chamber.

In this way the package size of the two-stage water separator device can be reduced. The design and construction is simplified with a single water volume flow outlet port. The available installation space is optimally used with the two-stage water separator device. The water separation performance can be increased while at the same time restricting the necessary installation space to a minimum.

In an embodiment, the first-stage water volume flow outlet channel is spatially separated from the second-stage water volume flow outlet channel in that the water volume flow outlet port includes a first-stage water volume flow outlet port spatially separated from a second-stage water volume flow outlet port.

In this way the first-stage water volume flow outlet channel is also closed off from the second-stage water volume flow outlet channel. However, in this embodiment the separation is achieved by means of a spatial separation. A parasite volume flow between the first-stage water volume flow outlet channel and the second-stage water volume flow outlet channel is thus also avoided. However, in order to be able to sufficiently drain the first-stage water separation chamber and the second-stage water separation chamber a water volume flow outlet port is provided for each of the water separation chambers. The first-stage water volume flow outlet port drains the first-stage water separation chamber. The second-stage water volume flow outlet port drains the second-stage water separation chamber.

In an embodiment, an inlet channel diameter of the water-laden volume flow inlet channel increases in a direction towards the first-stage water separation chamber for decreasing a flow velocity of the water-laden volume flow.

A two-stage water separator device is provided in which the flow velocity of the water-laden volume flow is reduced upon entering the first-stage water separation chamber. To this end, the inlet channel diameter increases in the direction towards the first-stage water separation chamber. Said increase can be conical in shape, for example. The increase may begin at an end of the water-laden volume flow inlet channel adjacent to the water-laden volume flow inlet port. The increase may terminate when the water-laden volume flow inlet channel reaches the first-stage water separation chamber. The reduction in flow velocity results in a more even distribution of the water droplets contained in the water-laden volume flow within the first-stage water separation chamber. The water separation performance can be increased.

In an embodiment, the axis of the water-laden volume flow inlet channel is laterally offset to the axis of the water separator housing for creating a tangential inflow.

In an embodiment a radial extension of the swirl generator housing corresponds to at least one half, preferably at least two thirds, of a radial extension of the first-stage water separation chamber.

The radial extension of the swirl generator housing is therefore dimensioned relatively large compared to the radial extension of the first-stage water separation chamber. As a result, the flow velocity of the water-laden volume flow at the entrance of the swirl generator housing is reduced. This is considered advantageous. The amount of water droplets potentially still dragged along in the water-laden volume flow near the water collection area is reduced as the flow velocity of the water-laden volume flow decreases upon entering the swirl generator housing. The water separation performance is improved.

### Brief Description of Drawings

Further advantages can be seen in the following description of the drawings. The drawings show examples of the embodiments. The drawings, description and claims contain numerous features in combination. The person skilled in the art will expediently consider the features individually and combine them to form further useful combinations.
Fig. 1A shows a perspective view of a two-stage water separator device, according to embodiments.
Fig. 1B shows a top plane view of the two-stage water separator device of Fig. 1A.
Fig. 1C shows a cross-sectional view of the two-stage water separator device along line I-I' of Fig. 1B.
Fig. 1D shows a cross-sectional view of the two-stage water separator device along line II-II' of Fig. 1C.
Fig. 1E shows a plane view of the two-stage water separator device along line III-III' of Fig. 1C.
Fig. 2A shows a perspective view of another two-stage water separator device, according to embodiments.
Fig. 2B shows a top plane view of the other two-stage water separator device of Fig. 2A.
Fig. 2C shows a cross-sectional view of the other two-stage water separator device along line IV-IV' of Fig. 2B.
Fig. 2D shows a cross-sectional view of the other two-stage water separator device along line V-V' of Fig. 2C.
Fig. 2E shows a plane view of the other two-stage water separator device along line VI-VI' of Fig. 2C.

### Description of Embodiments

The figures only show examples and are not to be understood as limiting.

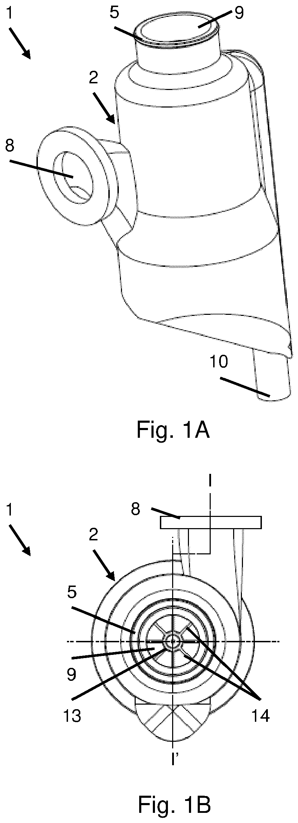

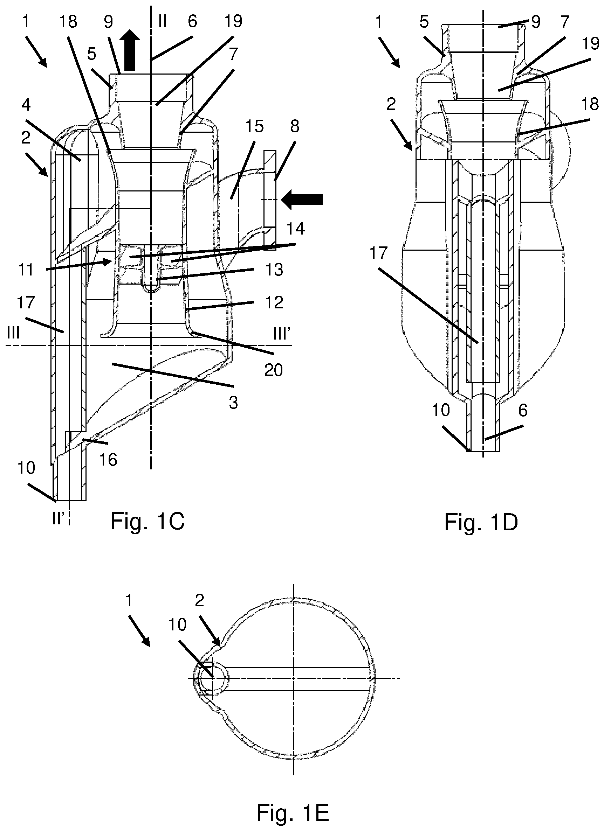

Fig. 1A shows a perspective view of a two-stage water separator device 1, according to embodiments. Fig. 1B shows a top plane view of the two-stage water separator device 1 of Fig. 1A. Fig. 1C shows a cross-sectional view of the two-stage water separator device 1 along line I-I' of Fig. 1B. Fig. 1D shows a cross-sectional view of the two-stage water separator device 1 along line II-II' of Fig. 1C. Fig. 1E shows a plane view of the two-stage water separator device 1 along line III-III' of Fig. 1C.

Referring to Figs. 1A-1E, the two-stage water separator device 1 includes a water separator housing 2. The water separator housing 2 includes a first-stage water separation chamber 3 and a second-stage water separation chamber 4. An immersion tube 5 is arranged coaxially with a center axis 6 of the water separator housing 2. The immersion tube 5 includes an immersion tube portion 7 which is immersed within the second-stage water separation chamber 4. The water separator housing 2 further includes a water-laden volume flow inlet port 8 and a water-unladen volume flow outlet port 9. Additionally a water volume flow outlet port 10 is provided. The two-stage water separator device 1 also includes a swirl generator assembly 11. The swirl generator assembly 11 includes a swirl generator housing 12. The swirl generator housing 12 extends through the first-stage water separation chamber 3 into the second-stage water separation chamber 4 thus fluidically connecting the two water separation chambers. Inside the swirl generator housing 12 a swirl generator 13 is arranged. The swirl generator 13 includes a plurality of vanes 14 arranged in a circumferential direction around the center axis 6.

Such a two-stage water separator device 1 is typically used in fuel cell vehicles. In such an application for example the exhaust air side of the anode path is mainly considered. Said exhaust air side generally provides a water-laden volume flow. The water-laden volume flow typically includes an air volume flow which is laden with water in the form of water droplets. Said water-laden volume flow enters the two-stage water separator device 1 via the water-laden volume flow inlet port 8. It then flows through a water-laden volume flow inlet channel 15. The water-laden volume flow inlet channel 15 is shown conically tapered. An inlet channel diameter of the water-laden volume flow inlet channel 15 increases in a direction towards the first-stage water separation chamber 3. The inlet channel diameter runs angular to an axial direction of the swirl generator housing 12, i.e., the center axis 6. The inlet channel diameter reaches a maximum extension upon its opening into the first-stage water separation chamber 3.

As the inlet channel diameter increases, the flow velocity of the water-laden volume flow flowing through the water-laden volume flow inlet channel 15 decreases. The deceleration of the water-laden volume flow achieves a more even distribution of the water droplets contained in the water-laden volume flow within the first-stage water separation chamber 3. Inside the first-stage water separation chamber 3 the water droplets in the water-laden volume flow then adhere to the inner wall of the first-stage water separation chamber 3. During this adhesion process water droplets of different sizes merge with each other. The so-formed larger water droplets are heavier and thus subjected to larger gravitational pull. Said gravitational pull acts in a direction towards the inclined bottom surface of the first-stage water separation chamber 3.

Over time the water content of the water-laden volume flow accumulates on said inclined bottom surface of the first-stage the first-stage water separation chamber 3. Thus, a water volume flow is generated within the first-stage water separation chamber 3. Said water volume flow exits the first-stage water separation chamber 3 via a throttle element 16 and into a water volume flow outlet channel 17. The remaining volume flow might, however, still contain a sizeable amount of water droplets as present in the water-laden volume flow.

Therefore, the second stage of the two-stage water separator device 1 is provided. After direction reversal from horizontal to vertical from the first-stage water separation chamber 3 to the second-stage water separation chamber 4, the swirl generator 13 is flown through. This generates a swirl of the water-laden volume flow within the swirl generator housing 12. As a result, the centrifugal force acting on the water droplets within the water-laden volume flow creates a water film on the inner walls of the swirl generator housing 12. This water film is accelerated in the axial direction parallel the center axis 6 in the direction towards the immersion tube portion 7.

At an axial end of the swirl generator housing 12 facing the immersion tube portion 7, a second-stage deflector portion 18 is provided. The second-stage deflector portion 18 is conically flared in the direction towards the immersion tube portion 7. The radial diameter of the second-stage deflector portion 18 is larger than the radial diameter of the immersion tube portion 7. The second-stage deflector portion 18 extends in a circumferential direction of the swirl generator housing 12. It extends around the entire circumference of the swirl generator housing 12. Hence, the water film on the inner walls of the swirl generator housing 12 detaches at the edge of the second-stage deflector portion 18. It flows past the edges of the immersion tube portion 7 and into the second-stage water separation chamber 4. There the water droplets of the water film adhere to the inner walls of the second-stage water separation chamber 4 and are pulled toward its inclined bottom surface by means of gravity. They enter the water volume flow outlet channel 17 and are discharged via the water volume flow outlet port 10.

As a result, the volume flow is then devoid of water droplets and constitutes the water-unladen volume flow, i.e., typically an air volume flow. It flows through a water-unladen volume flow outlet channel 19. The water-unladen volume flow outlet channel 19 channels the water-unladen volume flow through the immersion tube portion 7 to the water-unladen volume flow outlet port 9 out of the two-stage water separator device 1.

In Fig. 1C, an embodiment is shown where a first-stage deflector portion 20 is arranged at an axial end of the swirl generator housing 12 facing the first-stage water separation chamber 3. The first-stage deflector portion 20 extends in a circumferential direction of the swirl generator housing 12. It extends around the entire circumference of the swirl generator housing 12. The first-stage deflector portion 20 serves a dual purpose. On the one hand, it deflects the water-laden volume flow inside the first-stage water separation chamber 3 to the inner walls of the latter. A water volume flow barrier between the first-stage water separation chamber 3 and the inside of the swirl generator housing 12 is thus provided. Water droplets whirled up inside the first-stage water separation chamber 3 hit the first-stage deflector portion 20 and are deflected back into the first-stage water separation chamber 3. They are thereby prevented from entering the inner space of the first-stage water separation chamber. They may then adhere to the inner walls of the first-stage water separation chamber 3. There they may combine with other water droplets to form larger water droplets which then remain separated from the water-lade volume flow. Hence, the water separation performance is improved. On the other hand, the first-stage deflector portion 20 also provides a smooth contour as it is conically flared. The first-stage deflector portion 20 is conically flared in a direction away from the second-stage deflector portion 18. The smooth contour of the conically flared first-stage deflector portion 20 creates an optimization of the flow conditions at the inlet opening. The still remaining water droplets are hence sucked into the swirl generator assembly 11 and are routed to the second stage together with the water-laden volume flow downstream. The water separation performance is improved.

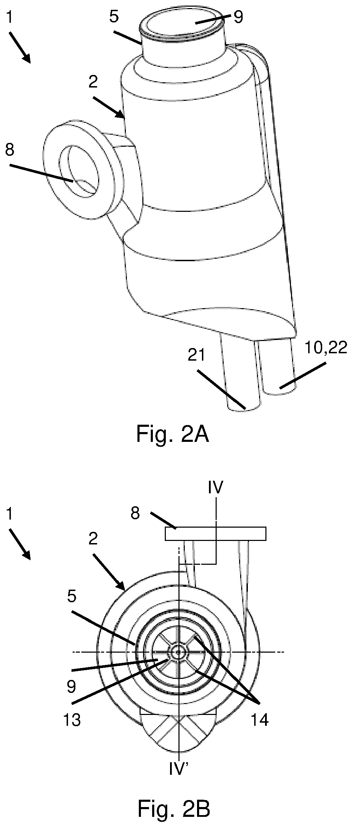

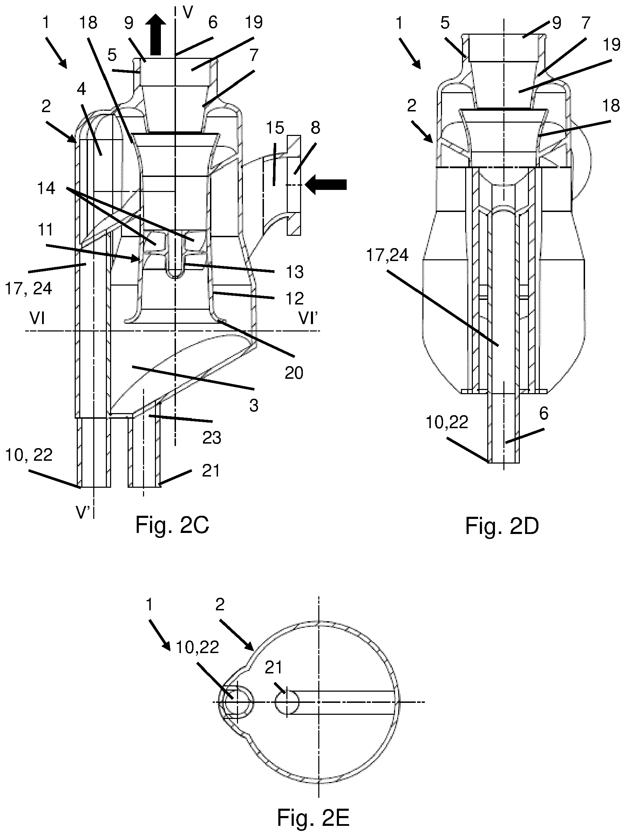

Fig. 2A shows a perspective view of another two-stage water separator device 1', according to embodiments. Fig. 2B shows a top plane view of the other two-stage water separator device 1' of Fig. 2A. Fig. 2C shows a cross-sectional view of the other two-stage water separator device 1' along line IV-IV' of Fig. 2B. Fig. 2D shows a cross-sectional view of the other two-stage water separator device 1' along line V-V' of Fig. 2C. Fig. 2E shows a plane view of the other two-stage water separator device 1' along line VI-VI' of Fig. 2C. Identical reference numerals denote identical features.

Referring to Figs. 2A-2E, the throttle element 16 fluidically connecting the water collection area of the first-stage water separation chamber 3 with the water volume flow outlet channel 17 is replaced by a first-stage water volume flow outlet port 21. The first-stage water volume flow outlet port 21 drains the water volume flow out of the first-stage water separation chamber 3. In an embodiment, the water volume flow outlet port 10 operates as a second-stage water volume flow outlet port 22. The second-stage water volume flow outlet port 22 drains the water volume flow out of the second-stage water separation chamber 4. The first-stage water volume flow outlet port 21 and the second-stage water volume flow outlet port 22 are spatially separated. In comparison, the throttle element 16 in the embodiments in Fig. 1C served as a fluidic separation between the first-stage water separation chamber 3 and the second-stage water separation chamber 4.

Such a fluidic or spatial separation between the first-stage water separation chamber 3 and the second-stage water separation chamber 4 is necessary in view of the pressure regime inside the two-stage water separator device 1'. In general, the first-stage water separation chamber 3 and the second-stage water separation chamber 4 have different pressure levels. The pressure level in the first-stage water separation chamber 3 is typically higher than the pressure level in the second-stage water separation chamber 4. Hence, there is a risk of a parasite volume flow forming between the first-stage water separation chamber 3 and the second-stage water separation chamber 4. Said parasite volume flow may whirl up and drag along water droplets. The overall water separation performance is reduced.

In order to avoid such a parasite volume flow the first-stage water separation chamber 3 and the second-stage water separation chamber 4 are fluidically and/or spatially separated. This is achieved by means of the throttle element 16 or the first-stage water volume flow outlet port 21 and the second-stage water volume flow outlet port 22. The first-stage water volume flow outlet port 21 thereby defines a first-stage water volume flow outlet channel 23. The second-stage water volume flow outlet port 22 thereby defines a second-stage water volume flow outlet channel 24. The latter corresponds to the water volume flow outlet channel 17 of the embodiments in Figs. 1C and 1D.

### Reference Signs List

- 1: two-stage water separator device
- 2: water separator housing
- 3: first-stage water separation chamber
- 4: second-stage water separation chamber
- 5: immersion tube
- 6: center axis
- 7: immersion tube portion
- 8: water-laden volume flow inlet port
- 9: water-unladen volume flow outlet port
- 10: water volume flow outlet port
- 11: swirl generator assembly
- 12: swirl generator housing
- 13: swirl generator
- 14: vane
- 15: water-laden volume flow inlet channel
- 16: throttle element
- 17: water volume flow outlet channel
- 18: second-stage deflector portion
- 19: water-unladen volume flow outlet channel
- 20: first-stage deflector portion
- 21: first-stage water volume flow outlet port
- 22: second-stage water volume flow outlet port
- 23: first-stage water volume flow outlet channel
- 24: second-stage water volume flow outlet channel

## Claims

1. A two-stage water separator device (1; 1') comprising:
a water separator housing (2) comprising a first-stage water separation chamber (3) and a second-stage water separation chamber (4),
wherein the first-stage water separation chamber (3) comprises a water-laden volume flow inlet port (8) defining a water-laden volume flow inlet channel (15) for channeling a water-laden volume flow into the first-stage water separation chamber (3), and
wherein the second-stage water separation chamber (4) comprises a water-unladen volume flow outlet port (9) defining a water-unladen volume flow outlet channel (19) for channeling a water-unladen volume flow out of the second-stage water separation chamber (4), a reversal of flow direction from horizontal to vertical occurring between the water-laden volume flow and the water-unladen volume flow;
an immersion tube (5) comprising an immersion tube portion (7) immersed in the second-stage water separation chamber (4) and for fluidically connecting the water-unladen volume flow outlet port (9) with the second-stage water separation chamber (4);
a swirl generator assembly (11) comprising a swirl generator housing (12) and a swirl generator (13) arranged inside the swirl generator housing (12), the swirl generator (13) being for generating a swirl in the water-laden volume flow fluidically between the first-stage water separation chamber (3) and the second-stage water separation chamber (4); and
a water volume flow outlet port (10; 21, 22) defining a water volume flow outlet channel (17; 23, 24) for channeling a water volume flow out of the water separator housing (2),
**characterized in that** the swirl generator housing (12) comprises a second-stage deflector portion (18) that is conically flared and in axial alignment with and facing the immersion tube portion (7), the second-stage deflector portion (18) being for deflecting the water-laden volume flow.

2. The two-stage water separator device (1; 1') according to claim 1, wherein a radial extension of the second-stage deflector portion (18) exceeds a radial extension of the immersion tube portion (7).

3. The two-stage water separator device (1; 1') according to claim 1 or 2, wherein the swirl generator housing (12) further comprises a first-stage deflector portion (20) that is conically flared and arranged in the first-stage water separation chamber (3), the first-stage deflector portion (20) being for deflecting the water-laden volume flow.

4. The two-stage water separator device (1; 1') according to one of claims 1 to 3, wherein an axial extension of the swirl generator (11) corresponds to at most one half of an axial extension of the swirl generator housing (12).

5. The two-stage water separator device (1; 1') according to one of claims 1 to 4, wherein the water volume flow outlet channel (17; 23, 24) comprises a first-stage water volume flow outlet channel (23) fluidically and/or spatially separated from a second-stage water volume flow outlet channel (24).

6. The two-stage water separator device (1; 1') according claim 5, wherein the first-stage water volume flow outlet channel (23) is spatially separated from the second-stage water volume flow outlet channel (24) in that the water volume flow outlet port (10; 21, 22) comprises a first-stage water volume flow outlet port (21) spatially separated from a second-stage water volume flow outlet port (22).

7. The two-stage water separator device (1; 1') according to one of claims 5, wherein the water separator housing (2) further comprises a throttle element (16) fluidically separating the first-stage water separation chamber (3) from the second-stage water separation chamber (4) by fluidically connecting the lowest point of the first-stage water separation chamber (3) and the second-stage water volume flow outlet channel (24).

8. The two-stage water separator device (1; 1') according to claim 7, wherein the water volume flow outlet port (10; 21, 22) is arranged as a common water volume flow outlet port (10) for the first-stage water separation chamber (3) and the second-stage water separation chamber (4).

9. The two-stage water separator device (1; 1') according to one of claims 1 to 8, wherein an inlet channel diameter of the water-laden volume flow inlet channel (15) increases in a direction towards the first-stage water separation chamber (3) for decreasing a flow velocity of the water-laden volume flow.

10. The two-stage water separator device (1; 1') according to one of claims 1 to 9, wherein an axis of the water-laden volume flow inlet channel (15) is laterally offset to an axis of the water separator housing (2) for creating a tangential inflow.
